# FASCICULE DE BREVET EUROPEEN

(11) **EP 2 938 536 B1**
(45) Date de publication et mention de la délivrance du brevet: **13.12.2017**
(21) Numéro de dépôt: 13814075.1
(22) Date de dépôt: 16.12.2013
(51) Int. Cl.: B64C 1/00, B64C 1/06, B64C 3/20, B64C 7/00, B64C 11/20, B64C 11/26, F01D 5/28, F01D 21/04

(54) **DISPOSITIF D'ABSORPTION D'ÉNERGIE POUR ÉLÉMENT DE STRUCTURE D'AÉRONEF**
ENERGIEAUFNAHMEVORRICHTUNG FÜR EIN STRUKTURBAUTEIL EINES FLUGZEUGS
ENERGY ABSORPTION DEVICE FOR AIRCRAFT STRUCTURAL ELEMENT

(30) Priorité: 27.12.2012 FR 1262895
(43) Date de publication de la demande: 04.11.2015
(73) Titulaire: Airbus, 31700 Blagnac (FR)
(72) Inventeur: PETIOT, Caroline, F-91940 Les Ulis (FR); BERMUDEZ, Michel, F-92150 Suresnes (FR); MESNAGE, Didier, F-92210 Saint-cloud (FR)
(74) Mandataire: Ipside
(86) Numéro de dépôt international: PCT/EP2013/076731
(87) Numéro de publication internationale: WO 2014/102082

(56) Documents cités:
- EP-A2- 0 030 129
- DE-A1-102010 027 696
- FR-A1- 2 748 719
- GB-A- 2 262 315
- US-A- 4 302 155

## Description

### Domaine de l'invention

L'invention concerne un dispositif d'absorption d'énergie passif pour élément de structure d'aéronef, tel qu'une pale, une aube ou tout autre élément d'hélice, de voilure, de mat ou de fuselage d'un aéronef. Ce dispositif d'absorption d'énergie est prévu pour être intégré dans un élément de structure d'aéronef afin de limiter le risque de détachement partiel ou de fragmentation de l'élément de structure en cas d'impact et, ainsi, réduire la vulnérabilité de cet élément de structure à la menace d'impact durant le vol de l'aéronef.

L'invention concerne également un élément de structure d'aéronef comportant un tel dispositif d'absorption d'énergie cinétique.

L'invention trouve des applications dans le domaine de l'aéronautique et, notamment, dans le domaine des aéronefs à motorisation arrière. Elle trouve, en particulier, des applications dans le domaine de la fabrication des turbopropulseurs et des rotors d'hélicoptères ainsi que dans le domaine de la fabrication des aubes en composites. L'invention peut également trouver des applications dans la fabrication des zones de bord d'attaque des voilures fixes d'avion ou toute autre structure devant résister aux impacts.

### Etat de la technique

Il est connu, dans le domaine de l'aéronautique, que les éléments de structure tournants et les éléments de voilure sont soumis à un risque élevé d'impacts d'oiseaux, de grêle, de blocs de glace, de cailloux ou encore de morceaux de pneu ou autre débris durs rencontrés par l'aéronef en vol, à l'atterrissage ou au décollage.

Les éléments tournants associés au moteur ou à la voilure mobile d'un aéronef, par exemple les hélices ou éléments d'hélices comme les aubes et les pales d'aéronef, sont particulièrement exposés au contact dynamique généré par les oiseaux ou autres débris rencontrés par l'aéronef. En particulier, les pales en matériaux composites de certains moteurs et les pales d'hélicoptères sont particulièrement vulnérables. Or, ces impacts sont
très énergétiques car la vitesse de l'impact peut atteindre 110m/s. Ils peuvent donc s'avérer particulièrement vulnérables pour les éléments de structure tournants et, dans des cas extrêmes, entraîner le crash de l'aéronef.

Dans le cas des moteurs d'aéronef à hélices contrarotatives à motorisation arrière, les moteurs sont généralement situés à proximité du fuselage. Comme ce type de moteur n'est généralement pas caréné, un impact sur les éléments tournants du moteur peut générer le détachement d'un élément du moteur ou d'une partie de cet élément de moteur, avec toutes les conséquences que cela induit pour le vol de l'aéronef. Il existe donc, lors d'un impact, un fort risque de détachement partiel ou complet d'un élément tournant du moteur et de conséquences en chaîne avec le ré-impact de cet élément détaché sur un autre élément tournant du moteur ou d'un moteur opposé.

Les constructeurs aéronautiques cherchent donc à minimiser au mieux une perte partielle ou totale des éléments tournants des moteurs en cas d'impact en créant des éléments de structure tournants aptes à résister à ces impacts.

On connait ainsi dans l'art antérieur le brevet français FR 2 748 719 qui décrit un dispositif d'absorption d'énergie cinétique pour élément de structure d'aéronef susceptible d'être soumis à un impact dynamique comportant une enveloppe externe contenant un coeur en mousse intégrant des éléments de renfort comprenant des fils discontinus. On connait aussi le brevet allemand DE10 2010 027696 qui s'intéresse également à un dispositif de protection à plusieurs compartiments dont le coeur en mousse comprend des éléments de renfort en forme d'aiguille.

Or ces dispositifs ne sont pas entièrement satisfaisant et, compte tenu de leur importance pour les aéronefs, il y a la nécessité d'offrir une absorption d'énergie cinétique améliorée.

### Exposé de l'invention

L'invention a justement pour but de remédier aux inconvénients des techniques exposées précédemment. A cette fin, l'invention propose un dispositif d'absorption d'énergie pour élément de structure d'aéronef, tels qu'une voilure fixe d'avion ou des pales, des aubes ou tout autre élément tournant de moteur d'avion ou d'hélicoptère, permettant de réduire la menace liée à l'impact d'oiseaux, de débris de pneu ou de débris durs.

Pour cela, l'invention propose d'intégrer, dans les éléments de structure, un dispositif permettant d'absorber, de façon passive, l'énergie cinétique générée par l'impact afin d'éviter la fragmentation de cet élément de structure. Ce dispositif d'absorption d'énergie comporte une enveloppe externe réalisée dans un matériau composite tressé résistant à la fragmentation et un coeur en mousse intégrant des éléments de renfort susceptibles de dissiper l'énergie cinétique générée par l'impact.

De façon plus précise, l'invention concerne un dispositif d'absorption d'énergie cinétique pour élément de structure d'aéronef susceptible d'être soumis à un impact dynamique, caractérisé en ce qu'il comporte :
- une enveloppe externe en matériau composite tressé apte à conserver, après impact, une intégrité,
- un coeur en mousse, contenu dans l'enveloppe externe et apte à remplir au moins partiellement l'enveloppe externe, ledit coeur en mousse étant apte à absorber au moins partiellement l'énergie cinétique générée par l'impact et
- des éléments de renfort intégrés au moins en partie dans le coeur en mousse pour dissiper, en association avec le coeur en mousse, l'énergie cinétique générée par l'impact,
- les éléments de renfort comprenant des fils discontinus insérés par piquage dans le coeur en mousse, et
- les fils discontinus comportant chacun une tête en L ou en T, rabattue à l'extérieur de l'enveloppe externe.

Le dispositif d'absorption d'énergie cinétique de l'invention peut comporter une ou plusieurs des caractéristiques suivantes :
- l'enveloppe externe comporte une pluralité de plis de mèches à imprégner, tressées avec des fibres sèches.
- les fibres à imprégner sont en carbone, en aramide et/ou en PBO.
- les éléments de renfort comprennent des fils continus insérés par piquage dans le coeur en mousse et formant des boucles au sein de la mousse.
- les éléments de renfort comprennent des fils discontinus insérés par piquage dans le coeur en mousse.
- les fils discontinus comportent chacun une tête en L ou en T rabattue à l'extérieur de l'enveloppe externe.
- les fils sont imprégnés d'une résine durcissante.
- les fils sont piqués dans le coeur en mousse selon des angles évolutifs.
- les éléments de renfort comportent des cloisons internes traversant le coeur en mousse et créant des cloisonnements dans la mousse.
- les éléments de renfort sont en carbone et/ou en aramide.
- les éléments de renfort comportent un ensemble de clous constitués chacun d'une tige, d'une pointe et d'une tête en carbone ou contre-frappe solide (pastille métallique ou carbone) favorisant ainsi le maintien du clou pendant sa fragmentation, les clous étant entourés d'une tresse en fibre de carbone, aramide ou autre.
- le coeur en mousse comporte une partie arrière entourant les clous et une partie avant en matériau élastique, placée en regard des pointes des clous, pour répartir l'énergie cinétique générée par l'impact suivant plusieurs incidences.

En outre, l'invention concerne un élément de structure d'aéronef, comportant un bord d'attaque et un bord de fuite, caractérisé en ce qu'il comporte un dispositif d'absorption d'énergie cinétique tel que décrit précédemment, situé dans une zone du bord d'attaque.

### Brève description des dessins

La figure 1 représente une vue en coupe d'un exemple d'élément de structure tournant d'aéronef muni du dispositif d'absorption d'énergie de l'invention.
Les figures 2A et 2B représentent le dispositif d'absorption d'énergie de l'invention avec un premier mode de réalisation des éléments de renfort.
Les figures 3A et 3B représentent le dispositif d'absorption d'énergie de l'invention avec un deuxième mode de réalisation des éléments de renfort.
Les figures 4A et 4B représentent le dispositif d'absorption d'énergie de l'invention avec un troisième mode de réalisation des éléments de renfort.
Les figures 5A à 5D représentent le dispositif d'absorption d'énergie de l'invention avec un quatrième mode de réalisation des éléments de renfort.
Les figures 6A et 6B représentent le dispositif d'absorption d'énergie de l'invention avec une variante des éléments de renfort des figures 2A et 2B.

### Description détaillée de modes de réalisation de l'invention

L'invention propose un dispositif d'absorption d'énergie cinétique de type passif, destiné à être intégré dans une voilure fixe d'avion ou dans une pale, une aube ou tout autre élément de structure tournant d'avion ou d'hélicoptère ou tout autre structure devant résister aux impacts. Qu'il soit fixe ou tournant, l'élément dans lequel le dispositif d'absorption d'énergie cinétique est intégré sera appelé, par la suite, élément de structure. Cet élément de structure est destiné, d'une part, à absorber ou dissiper l'énergie cinétique générée par un impact et, d'autre part, à empêcher la fragmentation ou la dislocation de cet élément de structure afin qu'il conserve son intégrité même en cas d'impact.

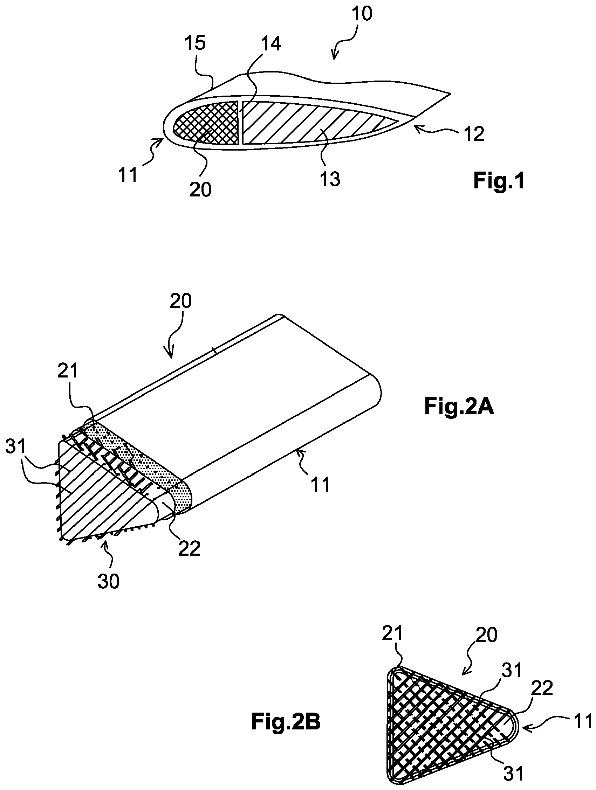

Un exemple d'élément de structure pouvant accueillir le dispositif d'absorption d'énergie cinétique de l'invention est représenté sur la figure 1. Cette figure 1 montre l'exemple d'une pale selon une vue en coupe. Cette pale 10 a une forme de section oblongue avec, à l'avant, un bord d'attaque 11 et, à l'arrière, un bord de fuite 12 opposé au bord d'attaque.

Cette pale 10 comporte une enveloppe de pale 15 à l'intérieur de laquelle est logé un corps de pale 13. L'enveloppe de pale 15 contient également le dispositif d'absorption d'énergie cinétique 20 de l'invention. Ce dispositif d'absorption d'énergie cinétique 20 est placé dans la zone du bord d'attaque 11 de la pale. En effet, lors d'un impact, c'est la zone du bord d'attaque 11, situé en extérieur de l'hélice, qui reçoit l'impact en premier. C'est donc cette zone 11 qui doit être capable d'absorber l'énergie cinétique générée par l'impact.

Pour assurer une unité entre le corps de pale 13 et le dispositif d'absorption d'énergie cinétique 20, une interface dispositif/corps de pale 14 est logée entre le dispositif d'absorption d'énergie cinétique 20 et le corps de pale 14 et assure l'accolement du dispositif d'absorption d'énergie cinétique avec le corps de pale à l'intérieur de l'enveloppe de pale 15.

Il est à noter que la figure 1 représente un exemple de pale. Toutefois, tout élément de structure est constitué de façon similaire d'une enveloppe d'élément, d'un corps d'élément, d'une interface et du dispositif d'absorption d'énergie cinétique de l'invention. Ainsi, quel que soit l'élément de structure considéré (pale, aube, voilure fixe, etc.) ce dernier comporte un bord d'attaque dans lequel est logé le dispositif d'absorption d'énergie cinétique de l'invention.

Selon l'invention, le dispositif d'absorption d'énergie cinétique comprend un coeur en mousse ainsi que des éléments de renfort, logés dans une enveloppe externe. Cette enveloppe externe du dispositif d'absorption d'énergie cinétique peut constituer l'enveloppe de pale 15. L'enveloppe externe entoure alors à la fois le coeur en mousse, les éléments de renfort et le corps de pale 13. Dans ce cas, la totalité de l'enveloppe de pale 15 est réalisée de façon identique à l'enveloppe externe telle qu'elle sera décrite ultérieurement.

Un exemple de ce dispositif d'absorption d'énergie cinétique est représenté sur les figures 2A et 2B.

La figure 2A représente une vue en perspective partiellement éclatée d'un dispositif d'absorption d'énergie cinétique selon l'invention. La figure 2B représente une vue en coupe de ce même dispositif d'absorption d'énergie cinétique. Ces figures 2A et 2B montrent le dispositif d'absorption d'énergie cinétique de l'invention selon un premier mode de réalisation des éléments de renfort.

Le dispositif d'absorption d'énergie cinétique 20 de l'invention comporte une enveloppe externe 21 dont le rôle est de conserver au mieux l'intégrité de la forme de l'élément de structure après un impact. Cette enveloppe externe 21, qui sera décrite ultérieurement, est remplie par un coeur en mousse 22 dont le rôle est, d'une part, de rigidifier l'enveloppe externe 21 et, d'autre part, d'absorber au moins une partie de l'énergie cinétique générée par l'impact et de permettre de se tasser de façon à libérer du volume lors de la déformation de l'enveloppe.

Ce coeur de mousse 22 comporte en son sein des éléments de renfort 30 qui permettent de dissiper l'énergie cinétique provenant de l'impact et qui n'a pas été absorbée par le coeur en mousse 22. Cette dissipation de l'énergie cinétique par les éléments de renfort 30 peut se faire par rupture successive des éléments de renfort, par délaminage ou encore par frottement.

Le dispositif d'absorption d'énergie cinétique, avec son enveloppe externe 21, son coeur en mousse 22 et ses éléments de renfort 30, est destiné à être intégré sur un produit industriel tel qu'une pale ou tout autre élément de structure. Le dispositif d'absorption d'énergie cinétique de l'invention doit donc être apte à s'interfacer avec le produit industriel pour permettre une intégrité de ce produit. Aussi, l'enveloppe externe 21 du dispositif d'absorption d'énergie cinétique contient le coeur en mousse 22 et les éléments de renfort 30 de l'invention mais il peut également contenir d'autres éléments faisant parti du produit industriel.

L'enveloppe externe 21 du dispositif d'absorption d'énergie cinétique de l'invention forme une sorte de housse qui entoure et retient un coeur en mousse 22 et des éléments de renfort 30. L'ensemble est apte à dissiper l'énergie cinétique provenant de l'impact sans se fragmenter ce qui permet d'éviter tout risque de générer des impacts en chaîne. Pour cela, l'enveloppe externe 21 doit pouvoir atteindre un fort niveau de déformation au moment de l'impact sans perdre son intégrité. Elle doit donc avoir un comportement de déformation plastique. Selon l'invention, l'enveloppe externe 21 est réalisée au moyen de matériaux composites tressés. Autrement dit, l'enveloppe externe 21 constitue une tresse de fibres composites. Cette tresse comporte une pluralité de mèches pré-imprégnées à base de renfort carbone uni-directionnel (dans le sens de la longueur de l'élément de structure) pour assurer l'interfaçage avec le corps de pale ou de tout élément de structure. Elle peut comporter, en particulier, 2 à 4 plis de mèches pré-imprégnées. La tresse comporte également des couches de préformes sèches tressées avec les mèches pré-imprégnées. Dans ce cas, la tresse est une tresse 2D, c'est-à-dire en deux dimensions.

La tresse composite peut également être une tresse 3D, c'est-à-dire en trois dimensions. Dans ce cas, la tresse composite comporte, en plus de la tresse 2D, un renfort dans l'épaisseur. Le maillage de la tresse est alors plus dense et participe à l'absorption d'énergie.

Quel que soit le type de tresse, 2D ou 3D, les fibres constitutives de cette tresse peuvent être soit du carbone, soit de l'aramide, soit de la mèche d'aramide tressée avec du carbone, ou encore de la fibre PBO (poly-phénylène-2,6-benzobisoxazole). La fibre carbone a l'avantage d'offrir une dissipation par rupture même lorsque la fibre carbone est dans l'enveloppe externe. De plus, une tresse en fibres carbone-carbone permet donc une dissipation d'énergie par frottement de l'énergie.

L'aramide a l'avantage d'être un matériau plus souple qui se déforme. Les fibres en aramide ne se rompent que peu mais se déforment. Une tresse en aramide a donc l'avantage d'accompagner la déformation du coeur en mousse et permet ainsi une dissipation de l'énergie par frottement.

On comprend donc que tresser des fibres de carbone avec des fibres en aramide peut apporter l'avantage d'une dissipation par rupture associée à une dissipation par frottement ou à une déformation du produit. Autrement dit, dans une configuration avec de l'aramide, l'aramide apportera l'aptitude à la déformation et garantit le maintien du dispositif pendant l'impact. Une tresse en PBO aura des avantages à peu près similaires à l'aramide. Dans la configuration d'une enveloppe hybride carbone-aramide, le carbone contribue à réduire la profondeur d'impact ainsi qu'à dissiper de l'énergie cinétique dans la rupture des fibres.

Le coeur en mousse de l'élément de structure de l'invention est constitué d'une mousse pouvant avoir plusieurs degrés de densité. Quelle que soit sa densité, la mousse a pour objectif de remplir au moins partiellement l'enveloppe externe et de lui apporter de la raideur. Elle permet également de maintenir les éléments de renfort en place.

La densité de la mousse peut varier entre 50Kg/m3 et 200Kg/m3.Une mousse de densité plus élevée a l'avantage d'absorber une plus grande quantité d'énergie cinétique. Une mousse de plus faible densité, a l'avantage d'alléger l'ensemble du dispositif d'absorption d'énergie cinétique ce qui correspond à un critère constant en aéronautique de diminution de la masse totale de l'aéronef. En outre, une mousse de plus faible densité a l'avantage de pouvoir être injectée, ce qui permet une mise en place plus aisée des éléments de renfort. Quelle que soit sa densité, la mousse garantit la stabilité du dispositif d'absorption d'énergie cinétique pendant le fonctionnement.

Cette mousse peut avoir une forme creuse ou non. Autrement dit, le coeur en mousse peut comporter un centre creux. La mousse ne constitue alors qu'une interface avec l'enveloppe externe pour donner la rigidité à l'enveloppe.

Le coeur en mousse 22 est muni d'éléments de renfort 30. Ces éléments de renfort 30 permettent de dissiper l'énergie cinétique provenant de l'impact. Différents éléments de renfort peuvent être utilisés de façon unitaire ou en association les uns avec les autres. Différents modes de réalisation des éléments de renfort vont être décrits séparément, sachant qu'ils peuvent être associés les uns aux autres.

Un premier mode de réalisation des éléments de renfort 30 est représenté sur les figures 2A et 2B. Ces éléments de renfort sont des fils 31 relativement souples qui sont placés par piquage à travers le coeur en mousse 22. Ces fils 31 peuvent être des fils continus ou des fils discontinus. Ils peuvent être placés dans le coeur de mousse 22 à des intervalles réguliers ou à des intervalles irréguliers. On comprendra qu'un fil a une tension différente s'il est continu ou s'il est discontinu. Dans le cas d'un fil continu, le point de rupture du fil est situé dans les retours du fil, c'est-à-dire dans les boucles situées au sein du coeur en mousse. Dans le cas de fils discontinus, la rupture se produit depuis une extrémité du fil jusqu'à son autre extrémité. Dans l'exemple de la figure 2A, les fils sont parallèles dans le coeur de mousse, dirigés longitudinalement par rapport au bord d'attaque. Dans l'exemple de la figure 2B, des fils 31a sont positionnés perpendiculairement à des fils 31b de façon à former un quadrillage permettant une dissipation de l'énergie cinétique suivant plusieurs incidences.

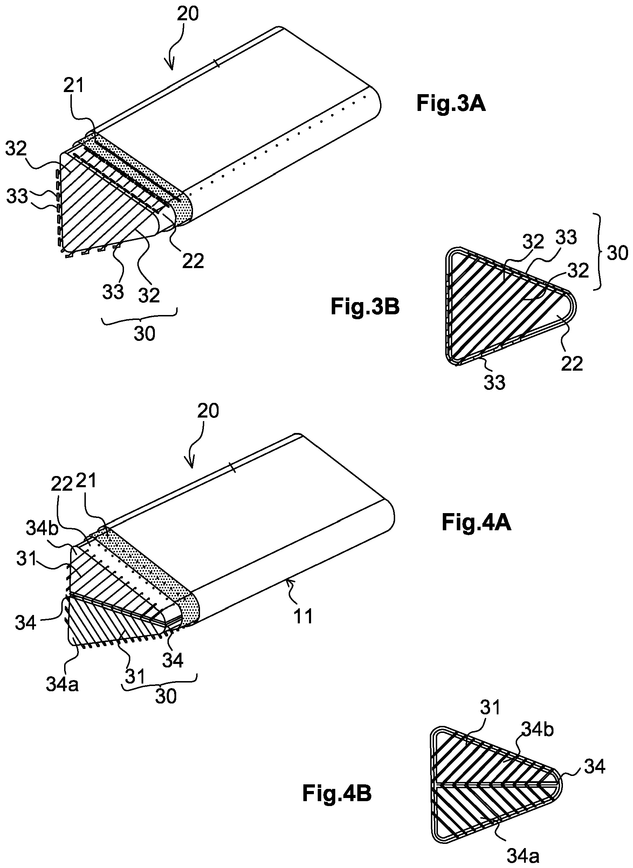

Les figures 3A et 3B montrent un deuxième mode de réalisation des éléments de renfort 30 du dispositif d'absorption d'énergie cinétique. La figure 3A représente une vue en perspective partiellement éclatée du dispositif d'absorption d'énergie cinétique et la figure 3B représente une vue en coupe de ce dispositif d'absorption d'énergie cinétique. Dans ce mode de réalisation, les éléments de renfort 30 sont des fils discontinus 32 munis chacun d'une tête 33 en forme de L ou de T. Dans l'exemple des figures 3A et 3B, les têtes sont en forme de T. Quelle soit en forme de L ou de T, la tête 33 est placée à l'extrémité du fil 32, en extérieur du coeur de mousse 22.

Chaque fil discontinu 32 est alors piqué à travers le coeur en mousse 22 et son extrémité est rabattue sur l'extérieur du coeur en mousse pour former la tête 33. Pour permettre le rabat des surlongueurs du fil 32 sur la paroi externe 23 du coeur en mousse 22 pour former la tête 33, un liant pegueux est appliqué sur la surlongueur du fil 32. Ainsi formée, la tête 33 en L ou en T du fil discontinu 32 est adhérente à l'enveloppe externe 21. Dans un tel mode de réalisation, la tête en L ou en T va se casser, lors de l'impact, ce qui permet de dissiper une partie de l'énergie cinétique par rupture ; une autre partie de l'énergie cinétique sera ensuite dissipée par frottement des fils contre la mousse.

En d'autres termes, les éléments de renfort comprenant des fils discontinus (32) sont insérés par piquage dans le coeur en mousse, et les fils discontinus (32) comportant chacun une tête (33) en L ou en T, sont rabattus à l'extérieur de l'enveloppe externe (21).

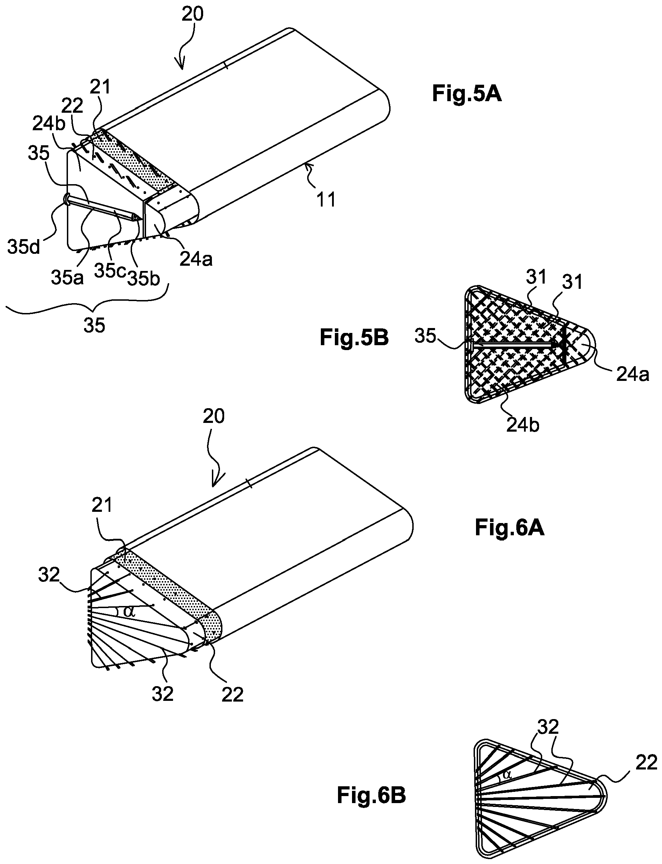

Un troisième mode de réalisation des éléments de renfort est représenté sur les figures 6A et 6B. Dans ce mode de réalisation, des fils discontinus 32 sont piqués suivant des angles évolutifs a. Autrement dit, ces fils 32 sont piqués de façon à former un angle non nul mais inférieur ou égal à 45° les uns avec les autres. Comme représenté sur les figures 6A et 6B, le piquage est réparti depuis une zone centrale de la face du coeur de mousse opposé à l'angle d'attaque et se prolonge jusque au bord du coeur de mousse formant le bord d'attaque. Dans l'exemple de la figure 6B, l'angle α entre deux fils 32 est d'environ 20°. Une telle disposition des fils permet de dissiper une énergie suivant plusieurs incidences.

Quel que soit le type des fils, c'est-à-dire continus, discontinus, à tête ou sans tête, ces fils peuvent être imprégnés d'une résine durcissante qui leur permet, après piquage, de durcir afin qu'ils puissent se rompre lors de l'impact.

Selon un autre mode de réalisation, les éléments de renfort du dispositif d'absorption d'énergie cinétique selon l'invention peuvent consister en des cloisons ou parois séparant le coeur de mousse en deux ou plusieurs parties cloisonnées. Les figures 4A et 4B représentent, respectivement, selon une vue en perspective partiellement éclatée et selon une vue en coupe, un exemple de cloisonnement du coeur en mousse. Dans cet exemple, une seule cloison 34 sépare le coeur en mousse en deux parties cloisonnées 34a, 34b. Cette cloison 34 est longitudinale, c'est-à-dire orientée selon un angle à 0° par rapport au bord d'attaque, de sorte que les deux parties cloisonnées forment chacune un triangle. Ainsi, si un impact se produit suivant le bord d'attaque de l'élément de structure (ce qui correspond à l'endroit le plus probable d'un impact) la cloison 34 va se rompre et ainsi dissiper l'énergie cinétique par rupture.

Dans une variante, plusieurs autres cloisons peuvent être positionnées dans le coeur en mousse selon des orientations différentes de façon à créer un cloisonnement multi-cloisons. Ces cloisons peuvent être positionnées longitudinalement ou bien transversalement. Une pluralité de cloisons longitudinales et transversales peut aussi être combinée.

Chaque cloison 34 est constituée de fibres de carbone ou de fibres d'aramide imprégné de résine. On comprendra que, du fait de la résine, les deux parties cloisonnées 34a, 34b du coeur en mousse forment un élément monobloc. Comme expliqué précédemment, lorsque la cloison est en carbone, elle aura tendance à se fragmenter en plusieurs parties lors d'un impact, ce qui permettra une dissipation d'énergie par rupture. Si la cloison est en aramide, elle se pliera en accordéon et dissipera l'énergie par frottement et par déformation.

Dans l'exemple des figures 4A et 4B, le coeur en mousse cloisonné, assure le maintien non seulement de la cloison 34 mais également de fils continus ou discontinus 31. Ces fils 31 sont orientés transversalement, par rapport au bord d'attaque, ce qui permet une dissipation de l'énergie cinétique suivant plusieurs incidences. Ces représentations montrent que plusieurs types d'éléments de renfort peuvent être combinés de façon à augmenter encore la dissipation d'énergie lors d'un impact.

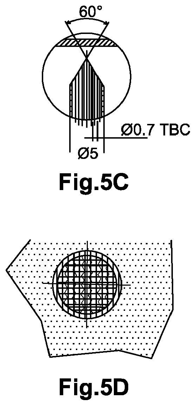

Sur les figures 5A, 5B, 5C et 5D, on a représenté un autre mode de réalisation de l'invention, dans lequel les éléments de renfort sont un ensemble de clous 35. Dans ce mode de réalisation, chaque clou 35 est constitué d'une tige 35a qui se termine, à une extrémité, par une pointe 35b et, à l'autre extrémité, par une tête 35d. La tête 35d, la tige 35a et la pointe 35b sont monoblocs, c'est-à-dire qu'ils forment un seul et même élément en carbone. L'extrémité en pointe 35b, opposée à la tête 35d de l'ensemble de clous, est chanfreinée coniquement, par exemple selon avec un angle de 30°, pour permettre, d'une part, une introduction aisée de l'ensemble de clous dans le coeur en mousse 22 et, d'autre part, un déclenchement stable du dispositif d'absorption d'énergie. La tige 35a de l'ensemble de clous, située entre la tête et la pointe, est entourée d'une tresse de carbone 35c.

Dans le mode de réalisation représenté sur les figures 5A et 5B, les dispositifs de l'ensemble des clous (dont un seul est visible sur la figure) sont positionnés selon une orientation à 0° depuis le bord d'attaque. Autrement dit, le clou est positionné face au bord d'attaque, ce qui correspond à l'orientation selon laquelle la probabilité de l'impact est la plus forte, néanmoins il est possible de les orienter selon d'autres incidences. Chaque ensemble de clous 35 est placé dans le coeur en mousse 22 de façon à ce que sa pointe soit proche du bord d'attaque. Ainsi, en cas d'impact, l'ensemble de clous 35 va recevoir l'impact au niveau de sa pointe 35b et va se briser peu à peu au fur et à mesure que la mousse est poussée par l'impact. L'ensemble de clous permet ainsi une dissipation de l'énergie cinétique par multi ruptures, la tresse de carbone 35a se déformant pour permettre une plus grande fragmentation du clou.

Plusieurs clous peuvent être alignés dans le coeur de mousse 22, c'est-à-dire répartis de façon régulière, parallèlement les uns aux autres. Au contraire, les clous peuvent être répartis de façon irrégulière avec des orientations différentes de façon à permettre une dissipation d'énergie provenant d'incidences différentes. Le pas de l'ensemble des clous ainsi que la densité de chaque ensemble de clous et le diamètre de ces ensembles de clous peuvent être adaptés en fonction de l'élément de structure et du type de coeur en mousse utilisé.

On comprendra que contrairement aux fils discontinus des figures 2A et 2B qui sont des liens discrets piqués dans le coeur en mousse avec des angles évolutifs pour être efficaces suivant différents angles d'impact, les ensemble de clous sont des éléments à plus large diamètre destinés à absorber une plus grande quantité d'énergie mais suivant des angles d'impact limités.

Dans une variante de ce mode de réalisation, le coeur en mousse 22 est constitué d'une partie avant 24a et d'une partie arrière 24b. La partie arrière 24b correspond au coeur de mousse 22 tel que décrit précédemment. Cette partie arrière 24b est transpercée par les clous 35. La partie avant 24a peut-être une mousse d'une densité différente de celle de la partie arrière 24b, avec une élasticité différente. Une telle mousse, combinée à une cloison ou non, permet de répartir l'énergie cinétique générée par l'impact sur plusieurs clous et suivant une plus grande incidence de sorte qu'un maximum de clous du dispositif d'absorption d'énergie cinétique dissipent l'énergie. L'impact se trouve ainsi réparti sur un maximum de clous et non uniquement sur les clous situés en face de la localisation de l'impact. La mousse de la partie avant 24a du coeur de mousse peut être, par exemple, un élastomère pour sa capacité d'amortissement ou une mousse de plus densité différente (par exemple plus forte) que celle de la partie arrière 24b du coeur en mousse et dont le pouvoir permet d'absorber l'énergie.

Ce mode de réalisation avec clous peut être combiné avec les modes de réalisation décrits précédemment tels que le mode de réalisation avec des fils piqués ou encore le mode de réalisation avec des cloisons. La représentation des figures 5A et 5B correspond à la combinaison des éléments de renfort sous forme de clous et ceux sous forme de fils piqués dans le coeur de mousse.

D'une façon générale, les différents modes de réalisation des éléments de renfort décrits précédemment peuvent être combinés les uns avec les autres de façon à augmenter la dissipation d'énergie en couvrant différents angles d'incidence d'impact. Tous les modes de réalisation décrits précédemment permettent un mécanisme de déclenchement progressif dans la dissipation de l'énergie. De cette façon, le coeur de mousse se détruit plus ou moins en fonction de l'énergie cinétique développée lors de l'impact.

## Revendications

1. - Dispositif d'absorption d'énergie cinétique pour élément de structure d'aéronef susceptible d'être soumis à un impact dynamique, **caractérisé en ce qu'**il comporte :
- une enveloppe externe (21) en matériau composite tressé apte à conserver, après impact, une intégrité,
- un coeur en mousse (22), contenu dans l'enveloppe externe et apte à remplir au moins partiellement ladite enveloppe externe, ledit coeur en mousse étant apte à absorber au moins partiellement l'énergie cinétique générée par l'impact,
- des éléments de renfort (30) intégrés au moins en partie dans le coeur en mousse pour dissiper, en association avec le coeur en mousse, l'énergie cinétique générée par l'impact,
- les éléments de renfort comprenant des fils discontinus (32) insérés par piquage dans le coeur en mousse, et
- les fils discontinus (32) comportant chacun une tête (33) en L ou en T, rabattue à l'extérieur de l'enveloppe externe (21).

2. - Dispositif d'absorption d'énergie cinétique selon la revendication 1, **caractérisé en ce que** l'enveloppe externe (21) comporte une pluralité de plis de mèches imprégnées, tressées avec au moins deux fibres sèches.

3. - Dispositif d'absorption d'énergie cinétique selon la revendication 2, **caractérisé en ce que** les mèches imprégnées et les fibres sèches sont en carbone, en aramide et/ou en PBO.

4. - Dispositif d'absorption d'énergie cinétique selon l'une quelconque des revendications 1 à 3, **caractérisé en ce que** les éléments de renfort comprennent des fils continus (31) insérés par piquage dans le coeur en mousse (22) et formant des boucles au sein de la mousse.

5. - Dispositif d'absorption d'énergie cinétique selon la revendication 4, **caractérisé en ce que** les fils sont imprégnés d'une résine durcissante.

6. - Dispositif d'absorption d'énergie cinétique selon l'une quelconque des revendications 4 à 5, **caractérisé en ce que** les fils sont piqués dans le coeur en mousse (22) selon des angles évolutifs (a).

7. - Dispositif d'absorption d'énergie cinétique selon l'une quelconque des revendications 1 à 6, **caractérisé en ce que** les éléments de renfort (30) comportent au moins une cloison interne (34) traversant le coeur en mousse (22) et créant des cloisonnements (34a, 34b) dans le coeur en mousse.

8. - Dispositif d'absorption d'énergie cinétique selon l'une quelconque des revendications 1 à 7, **caractérisé en ce que** les éléments de renfort (30) sont en carbone et/ou en aramide.

9. - Dispositif d'absorption d'énergie cinétique selon l'une quelconque des revendications 1 à 8, **caractérisé en ce que** les éléments de renfort (30) comportent des clous (35) constitués chacun d'une tige, d'une pointe et d'une tête en carbone, la tige étant entourée d'une tresse en fibres de carbone.

10. - Dispositif d'absorption d'énergie cinétique selon la revendication 9, **caractérisé en ce que** le coeur en mousse (22) comporte une partie arrière (24b) entourant les clous (35) et une partie avant (24a) en matériau élastomère ou en mousse d'une densité différente de celle de la partie arrière, placée en regard des pointes des clous, pour répartir l'énergie cinétique générée par l'impact suivant plusieurs incidences.

11. - Elément de structure (10) d'aéronef, comportant un bord d'attaque (11) et un bord de fuite (12), **caractérisé en ce qu'**il comporte un dispositif d'absorption d'énergie cinétique (20) selon l'une quelconque des revendications 1 à 10 situé dans une zone du bord d'attaque.

## Patentansprüche

1. Vorrichtung zur Absorption kinetischer Energie für ein Luftfahrzeug-Strukturelement, das einem dynamischen Aufprall ausgesetzt sein kann, **dadurch gekennzeichnet, dass** sie aufweist:
- eine Außenhülle (21) aus geflochtenem Verbundmaterial, das nach dem Aufprall unversehrt bleiben kann,
- einen Schaumstoffkern (22), der in der Außenhülle enthalten und fähig ist, die Außenhülle zumindest teilweise zu füllen, wobei der Schaumstoffkern die vom Aufprall erzeugte kinetische Energie zumindest teilweise absorbieren kann,
- Verstärkungselemente (30), die zumindest teilweise in den Schaumstoffkern eingebaut sind, um in Zusammenwirkung mit dem Schaumstoffkern die vom Aufprall erzeugte kinetische Energie zu streuen,
- wobei die Verstärkungselemente unterbrochene Fäden (32) enthalten, die durch Einstechen in den Schaumstoffkern eingefügt sind, und
- die unterbrochenen Fäden (32) je einen L- oder T-förmigen Kopf (33) aufweisen, der außerhalb der Außenhülle (21) umgeschlagen ist.

2. Vorrichtung zur Absorption kinetischer Energie nach Anspruch 1, **dadurch gekennzeichnet, dass** die Außenhülle (21) eine Vielzahl von Lagen imprägnierter Faserbänder aufweist, die mit mindestens zwei Trockenfasern geflochten sind.

3. Vorrichtung zur Absorption kinetischer Energie nach Anspruch 2, **dadurch gekennzeichnet, dass** die imprägnierten Faserbänder und die Trockenfasern aus Kohlenstoff, aus Aramid und/oder PBO sind.

4. Vorrichtung zur Absorption kinetischer Energie nach einem der Ansprüche 1 bis 3, **dadurch gekennzeichnet, dass** die Verstärkungselemente durchgehende Fäden (31) enthalten, die durch Einstechen in den Schaumstoffkern (22) eingefügt sind und innerhalb des Schaumstoffs Schleifen bilden.

5. Vorrichtung zur Absorption kinetischer Energie nach Anspruch 4, **dadurch gekennzeichnet, dass** die Fäden mit einem härtenden Harz imprägniert sind.

6. Vorrichtung zur Absorption kinetischer Energie nach einem der Ansprüche 4 bis 5, **dadurch gekennzeichnet, dass** die Fäden in den Schaumstoffkern (22) gemäß evolutiven Winkeln (a) eingestochen werden.

7. Vorrichtung zur Absorption kinetischer Energie nach einem der Ansprüche 1 bis 6, **dadurch gekennzeichnet, dass** die Verstärkungselemente (30) mindestens eine innere Trennwand (34) aufweisen, die den Schaumstoffkern (22) durchquert und Abschottungen (34a, 34b) im Schaumstoffkern erzeugt.

8. Vorrichtung zur Absorption kinetischer Energie nach einem der Ansprüche 1 bis 7, **dadurch gekennzeichnet, dass** die Verstärkungselemente (30) aus Kohlenstoff und/oder aus Aramid sind.

9. Vorrichtung zur Absorption kinetischer Energie nach einem der Ansprüche 1 bis 8, **dadurch gekennzeichnet, dass** die Verstärkungselemente (30) Nägel (35) aufweisen, die je aus einem Schaft, einer Spitze und einem Kopf aus Kohlenstoff bestehen, wobei der Schaft von einem Geflecht aus Kohlenstofffasern umgeben ist.

10. Vorrichtung zur Absorption kinetischer Energie nach Anspruch 9, **dadurch gekennzeichnet, dass** der Schaumstoffkern (22) einen hinteren Teil (24b), der die Nägel (35) umgibt, und einen vorderen Teil (24a) aus Elastomermaterial oder Schaumstoff einer anderen Dichte als diejenige des hinteren Teils aufweist, der gegenüber den Spitzen der Nägel angeordnet ist, um die durch den Aufprall erzeugte kinetische Energie gemäß mehreren Einfallwinkeln zu verteilen.

11. Luftfahrzeug-Strukturelement (10), das eine Vorderkante (11) und eine Hinterkante (12) aufweist, **dadurch gekennzeichnet, dass** es eine Vorrichtung zur Absorption kinetischer Energie (20) nach einem der Ansprüche 1 bis 10 aufweist, die sich in einer Zone der Vorderkante befindet.

## Claims

1. - Kinetic energy absorption device for an aircraft structural element liable to be subjected to a dynamic impact, **characterized in that** it comprises:
- an outer casing (21) made of braided composite material able, after impact, to maintain a degree of integrity,
- a foam core (22), contained inside the outer casing and able to fill said outer casing at least partially, said foam core being able at least partially to absorb the kinetic energy generated by the impact,
- reinforcing elements (30) incorporated at least in part into the foam core in order, in combination with the foam core, to dissipate the kinetic energy generated by the impact ,
- the reinforcing elements comprising discontinuous filaments (32) inserted into the foam core by stitching, and
- the discontinuous filaments (33) each comprising an L-shaped or T-shaped head (33) folded over onto the outside of the outer casing (21).

2. - Kinetic energy absorption device according to Claim 1, **characterized in that** the outer casing (21) comprises a plurality of plies of impregnated rovings braided with at least two dry fibers.

3. - Kinetic energy absorption device according to Claim 2, **characterized in that** the impregnated rovings and the dry fibers are made of carbon, of aramid and/or of PBO.

4. - Kinetic energy absorption device according to any one of Claims 1 to 3, **characterized in that** the reinforcing elements comprise continuous filaments (31) inserted into the foam core (22) by stitching and forming loops within the foam.

5. - Kinetic energy absorption device according to Claim 4, **characterized in that** the filaments are impregnated with a curable resin.

6. - Kinetic energy absorption device according to either one of Claims 4 and 5, **characterized in that** the filaments are stitched into the foam core (22) at evolving angles (α).

7. - Kinetic energy absorption device according to any one of Claims 1 to 6, **characterized in that** the reinforcing elements (30) comprise at least one internal partition (34) passing through the foam core (22) and creating compartments (34a, 34b) in the foam core.

8. - Kinetic energy absorption device according to any one of Claims 1 to 7, **characterized in that** the reinforcing elements (30) are made of carbon and/or of aramid.

9. - Kinetic energy absorption device according to any one of Claims 1 to 8, **characterized in that** the reinforcing elements (30) comprise nails (35) each consisting of a shank, of a spike and of a head made of carbon, the shank being surrounded by a braid of carbon fiber.

10. - Kinetic energy absorption device according to Claim 9, **characterized in that** the foam core (22) comprises a rear part (24b) surrounding the nails (35) and a front part (24a) made of elastomeric material or foam of a density different than that of the rear part, placed facing the spikes of the nails in order to spread the kinetic energy generated by the impact at various angles of incidence.

11. - Aircraft structural element (10) comprising a leading edge (11) and a trailing edge (12), **characterized in that** it comprises a kinetic energy absorption device (20) according to any one of Claims 1 to 10 situated in a region of the leading edge.
